# EUROPÄISCHE PATENTSCHRIFT

(11) **EP 3 804 000 B1**
(45) Veröffentlichungstag und Bekanntmachung des Hinweises auf die Patenterteilung: **10.08.2022**
(21) Anmeldenummer: 19725837.9
(22) Anmeldetag: 09.05.2019
(51) Int. Cl.: H01M 50/20, H01M 10/6556, H01M 10/617, H01M 10/643

(54) **TEMPERIERVORRICHTUNG FÜR EINZELNE, ZU EINEM MODUL ZUSAMMENGESETZTE BATTERIEZELLEN**
TEMPERATURE-CONTROL DEVICE FOR INDIVIDUAL BATTERY CELLS WHICH ARE COMBINED INTO A MODULE
DISPOSITIF DE RÉGULATION THERMIQUE POUR DES CELLULES E BATTERIE INDIVIDUELLES ASSEMBLÉES EN UN MODULE

(30) Priorität: 08.06.2018 AT 504582018
(43) Veröffentlichungstag der Anmeldung: 14.04.2021
(73) Patentinhaber: Kreisel Electric GmbH & Co KG, 4261 Rainbach im Mühlkreis (AT)
(72) Erfinder: KREISEL, Philipp, 4240 Freistadt (AT); KREISEL, Johann, 4240 Freistadt (AT); KREISEL, Markus, 4240 Freistadt (AT)
(74) Vertreter: Hübscher & Partner Patentanwälte GmbH
(86) Internationale Anmeldenummer: PCT/AT2019/050017
(87) Internationale Veröffentlichungsnummer: WO 2019/232556

(56) Entgegenhaltungen:
- EP-A1- 3 073 546
- WO-A1-2017/067923
- DE-A1-102016 205 237
- US-A1- 2009 325 052

## Beschreibung

### Technisches Gebiet

Die Erfindung bezieht sich auf eine Temperiervorrichtung für einzelne, zu einem Modul zusammengesetzte Batteriezellen, mit einem Grundkörper, der zum umfangsseitigen Umschließen der Batteriezellen bezüglich je einer Fügeachse paarweise gegenüberliegende Durchtrittsöffnungen aufweist und einen quer zu den Fügeachsen verlaufenden Strömungskanal für ein Temperierfluid bildet, wobei der Grundkörper wenigstens einen in Richtung der Fügeachsen verlaufenden Temperierfluidanschluss umfasst.

Batteriezellen, insbesondere auf Basis von Lithium-Ionen Technologie weisen eine stark von der Betriebstemperatur abhängige Lebensdauer auf, wobei bereits Temperaturunterschiede von 1 bis 3 Grad Celsius zu einer signifikanten Alterung führen können. Gerade bei Stoßbelastungen solcher Batteriezellen ist es daher wesentlich, die zufolge der chemischen Vorgänge auftretende Wärmeenergie rasch abzuführen, um eine lange Betriebsdauer zu ermöglichen. Der Einsatz von Fluidtemperiervorrichtungen hat sich dabei nicht zuletzt zur Verhinderung einer etwaigen Brandgefahr als sehr vorteilhaft erwiesen, allerdings lässt sich mit solchen Vorrichtungen in der Regel nur ein träges Regelungsverhalten erreichen, weil Strömungsverwirbelungen und dadurch resultierende Staudrücke raschere Strömungsgeschwindigkeiten und einen damit verbundenen höheren Volumendurchsatz verhindern. Dies wird zusätzlich durch den Einsatz leicht flüchtiger Temperierfluide erschwert, für die eine sichere Abdichtung erforderlich ist.

### Stand der Technik

Aus dem Stand der Technik sind Temperiervorrichtungen für einzelne, zu einem Modul zusammengesetzte Batteriezellen in einem Batteriesystem bekannt, die einen Grundkörper mit wenigstens einen in Richtung der Fügeachsen verlaufenden Temperierfluidanschluss aufweisen (WO 2017/067923 A1). In Richtung der Fügeachsen verlaufende Temperierfluidanschlüsse haben grundsätzlich den Vorteil, dass sich eine besonders kompakte Bauweise von aus einzelnen Batteriezellen aufgebauten Modulen und damit eine hohe Leistungsdichte ergibt, weil keine über den Querschnitt der Module in Richtung der Fügeachsen hinausragende Temperierfluidanschlüsse vorgesehen werden müssen und die Verbindungsleitungen zwischen den Modulen besonders kurzgehalten werden können. Nachteilig ist allerdings, dass in Richtung der Fügeachsen verlaufende Temperierfluidanschlüsse im Wesentlichen quer zum Strömungskanal ausgerichtet sind, weshalb die maximal erreichbare Strömungsgeschwindigkeit des Temperierfluids aufgrund sich einstellender Einlaufeffekte sowie Strömungsturbulenzen und sich daraus ergebenden Staudrücken nach oben begrenzt ist und darüber hinaus eine gleichmäßige Anströmung aller im Strömungskanal liegenden Batteriezellen nicht gewährleistet ist. Bei einer weiteren, für eine gute Zellentemperierung erforderlichen Erhöhung des Volumendurchsatzes würde es lediglich zu einer kritischen Erhöhung des Systemdrucks und damit zu einer Beschädigungsgefahr des Moduls kommen. Demzufolge kann mit derartigen Temperiervorrichtungen kein ausreichender Volumendurchsatz des Temperierfluids und keine gleichmäßige Anströmung aller Batteriezellen erzielt werden.

### Darstellung der Erfindung

Der Erfindung liegt somit die Aufgabe zugrunde, eine Temperiervorrichtung der eingangs geschilderten Art so auszugestalten, dass trotz einer kompakten Bauweise ein Betriebstemperaturfenster von wenigen Grad Celsius trotz hoher elektrischer Belastungen erreicht wird.

Die Erfindung löst die gestellte Aufgabe dadurch, dass der Grundkörper einen dem Temperierfluidanschluss in Richtung der Fügeachsen gegenüberliegenden Strömungsteiler aufweist, der Anströmflächen zur Teilung des Temperierfluidstromes in einzelne Teilströme und zur im Wesentlichen tangentialen Anströmung der angrenzenden Batteriezellen bildet.

Zufolge dieser Maßnahme erfolgt eine möglichst turbulenzfreie Umlenkung des Temperierfluidstromes aus der Richtung der Fügeachsen in die Längsrichtung des Strömungskanals, wobei zur Vermeidung von auftretenden Druckspitzen der Temperierfluidstrom insgesamt in mehrere Teilströme aufgeteilt wird. Die Anströmflächen, deren Flächennormalen mit dem Richtungsvektor der Fügeachse beispielsweise einen Winkel zwischen 0° und 90° einschließen können, verhindern, dass das über den Temperierfluidanschluss in den Strömungskanal einströmende Temperierfluid frontal auf eine quer zu seiner Fließrichtung ausgerichtete, üblicherweise durch den Grundkörper gebildete Anschlagfläche trifft und dort scharf umgelenkt wird. Aufgrund der erfindungsgemäßen Anströmflächen wird die Strömung stetig in Richtung der im Strömungskanal liegenden Batteriezellen umgelenkt, wobei sich aufgrund des längeren Fließweges das Druckniveau entspannt und dadurch Turbulenzen bzw. Staudrücke reduziert werden können. Insgesamt kann somit die Strömungsgeschwindigkeit und demnach der Volumendurchsatz des Temperierfluids erhöht werden. Zudem wird durch die erfindungsgemäßen Merkmale sichergestellt, dass die im Strömungskanal liegenden Batteriezellen gleichmäßig und im Wesentlichen tangential angeströmt werden. Dies bedeutet, dass die Anströmflächen die Teilströme so zu den umliegenden Batteriezellen leiten, dass im Wesentlichen die, bezogen auf die Teilstromrichtung lateralen Mantelflächen der Batteriezellen vom Temperierfluid umspült werden.

In diesem Zusammenhang können besonders vorteilhafte Strömungsbedingungen geschaffen werden, wenn der Strömungsteiler einen im Wesentlichen radial zu einer ersten an den Strömungsteiler angrenzenden Durchtrittsöffnung verlaufenden Hauptleitkamm aufweist. Dadurch wird der Temperierfluidstrom entlang der beiden Kammflanken aufgeteilt und umströmt die erste Batteriezelle bereits in zwei tangential zur Batteriezelle verlaufenden Teilströmen, was schädliche Druckspitzen in Folge eines sich radial zur ersten Batteriezelle ergebenden Staudrucks abbaut. In weiterer Folge können die erste, aber auch nachfolgende Zellen besser vom Temperierfluid umströmt werden.

Um auftretende Druckspitzen weiter zu reduzieren und insbesondere eine gleichmäßige Anströmung auch der am Rand des Strömungskanals liegenden Batteriezellen zu ermöglichen, wird vorgeschlagen, dass der Strömungsteiler zwei symmetrisch zum Hauptleitkamm und je im Wesentlichen radial zu einer an die erste Durchtrittsöffnung anschließenden Durchtrittsöffnung verlaufende Nebenleitkämme umfasst. Zufolge dieser Maßnahme bilden sich bei einer Anordnung des Strömungsteilers im Randbereich des Grundkörpers insgesamt vier Teilströme aus, von denen sich die randseitig liegenden an die Innenwand des Grundkörpers anlegen und die im Randbereich des Strömungskanals liegenden Batteriezellen tangential an ihren der Innenwand des Grundkörpers zugewandten Außenflächen umströmen. Zur weiteren Verringerung von Staudrücken kann sich der Scheitelgrat des Hauptleitkammes und / oder der Nebenleitkämme vom Temperierfluidanschlussbereich zu den angrenzenden Durchtrittsöffnungen hin verbreitern, weil lediglich beim direkten Auftreffen der Fluidströmung im Bereich des Temperierfluidanschlusses ein Aufspalten des Fluidstromes erforderlich ist, während in weiterer Folge die einzelnen Teilströme so weit voneinander getrennt werden sollen, dass sie die zu umspülenden Batteriezellen im Wesentlichen tangential anströmen. Es versteht sich von selbst, dass die Geometrien von sowohl Haupt- als auch Nebenkämmen im Zuge einer Strömungsoptimierung unterschiedlich ausgestaltet werden können bzw. noch zusätzliche Nebenkämme vorgesehen sein können.

Erfindungsgemäß ergeben sich in diesem Zusammenhang besonders vorteilhafte Konstruktionsbedingungen, wenn der Temperierfluidanschluss ein weibliches Kupplungsstück für die Temperierfluidleitung umfasst. Dabei können die Temperierfluidanschlüsse beispielsweise weibliche Ansteckhülsen bilden, sodass zwei aufeinanderfolgende Grundkörper über ein männliches, in die beiden Ansteckhülsen eingeführtes Verbindungsstück miteinander strömungsverbunden werden können. Dadurch kann bei einer gleichzeitigen Reduktion von Strömungsverlusten zwischen den Grundkörpern eine noch kompaktere Bauweise erzielt werden.

Um den Fertigungsaufwand sowie die Fertigungskosten der erfindungsgemäßen Temperiervorrichtung zu reduzieren wird vorgeschlagen, dass der Grundkörper zwei gegenüberliegende, einander gleichende Dichtelemente aufweist, die punktsymmetrisch zueinander ausgerichtet und über je eine Auflagefläche miteinander verbunden den Grundkörper bilden. Aufgrund der beispielsweise im Spritzgussverfahren mit nur einer einzigen Werkzeugkavität gefertigten Gleichteile, weisen diese im Wesentlichen idente Bauteiltoleranzen auf. Dadurch kann eine gesonderte Abstimmung zweier unterschiedlicher Dichtelemente aufeinander entfallen und der Assembliervorgang in der Regel rascher erfolgen.

Üblicherweise würde zur Abdichtung zweier als Gleichteile ausgebildeter Dichtelemente eine gemeinsame, umlaufende Randdichtung vorgesehen werden, die allerdings einen hohen Fertigungsaufwand beim Fügen der beiden Dichtelemente mit sich bringen würde, weil in beiden Dichtelementen Aufnahmenuten für die gemeinsame Randdichtung vorgesehen sind und die zur Abdichtung erforderliche Flächenpressung zwischen der Randdichtung und den jeweiligen Aufnahmenutwänden nur durch eine exakte Ausrichtung der gemeinsamen Randdichtung zu den jeweiligen Aufnahmenuten sichergestellt werden könnte. Die beiden Dichtelemente können auch je eine gesonderte, umlaufende Randdichtung aufweisen, die in die jeweilige Aufnahmenut eingesetzt wird. Allerdings kommt es dadurch beim Fügen der Dichtelemente zu einem Aufeinanderpressen der beiden Randdichtungen aufeinander, was der Fachmann zur Vermeidung einer Leckage zufolge einer unerwünschten Verformung der Randdichtungen regelmäßig vermeiden würde. Diese Problematik würde durch die erfindungsgemäß vorgesehenen höheren Strömungsgeschwindigkeiten des Temperierfluids noch verstärkt.

Daher wird vorgeschlagen, dass an die Auflagefläche grundkörperinnenseitig eine, einen Dichtungsausgleichsbereich aufweisende Aufnahmenut anschließt. Der Dichtungsausgleichsbereich bleibt im nicht assemblierten Zustand frei und ermöglicht eine vordefinierte Verformung der Randdichtungen. Erst beim Fügen der beiden Dichtelemente zueinander und beim Erreichen einer ausreichenden Flächenpressung wird der Dichtungsausgleichsbereich wenigstens teilweise durch die jeweilige Randdichtung ausgefüllt. Wird der Dichtungsausgleichsbereich auf der der Auflagefläche abgewandten Seite der Aufnahmenut vorgesehen, so kann zudem vermieden werden, dass die, die Auflageflächen bildenden Seitenwände der Dichtelemente zur Grundkörperaußenseite hin verformt werden und nicht mehr zueinander fluchtend abschließen, was das Erreichen einer vordefinierten Flächenpressung der Randdichtungen unmöglich machen würde.

Um auch bei einem im Verhältnis zur Randdichtung größeren Dichtungsausgleichsbereich eine zuverlässige Abdichtung zu ermöglichen, kann die Aufnahmenut eine gegenüber dem Nutgrund hervortretende Positionierstufe für eine Randdichtung aufweisen und der oberhalb der Positionierstufe freibleibende Nutbereich den Dichtungsausgleichsbereich bilden. Dadurch wird eine ungewünschte Verlagerung der Dichtung innerhalb der Aufnahmenut verhindert, weil die Randdichtung im Bereich des Nutgrundes zwischen einer Nutwand und der Positionierstufe quer zu ihrer Längsrichtung festgelegt wird, während eine elastische Verformung des Randdichtungskörpers in den oberhalb der Positionierstufe gebildeten Dichtungsausgleichsbereich weiterhin möglich bleibt. Darüber hinaus bedingt die elastische Verformung auch eine Anpressung der Randdichtung an die Positionierstufe, sodass die Abdichtung zwischen der Randdichtung und der Aufnahmenut selbst verbessert wird. Um in diesem Zusammenhang günstige Fertigungsbedingungen zu schaffen, kann die Randdichtung mit der Aufnahmenut beispielsweise im Mehrkomponenten-Spritzgussverfahren verbunden sein.

### Kurze Beschreibung der Erfindung

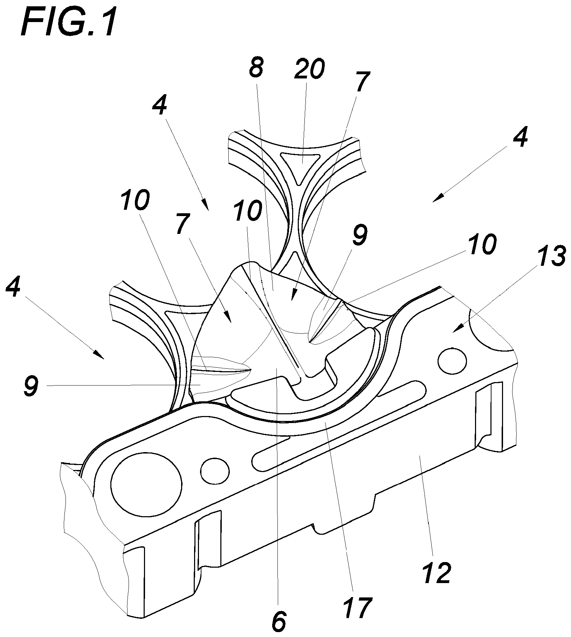

In der Zeichnung ist der Erfindungsgegenstand beispielsweise dargestellt. Es zeigen
- Fig. 1: eine schematische Detailansicht eines erfindungsgemäßen Strömungsteilers,
- Fig. 2: eine schematische Darstellung einer erfindungsgemäßen Temperiervorrichtung in einem kleineren Maßstab,
- Fig. 3: eine schematische Seitenansicht eines assemblierten Moduls in einem kleineren Maßstab,
- Fig. 4: eine vergrößerte Detailansicht der Fig. 2 mit nicht zusammengefügten Dichtelementen und
- Fig. 5: eine vergrößerte Detailansicht der Fig. 2 mit zusammengefügten Dichtelementen.

### Wege zur Ausführung der Erfindung

Eine erfindungsgemäße Temperiervorrichtung für einzelne, zu einem Modul 1 zusammengesetzte Batteriezellen 2 umfasst einen Grundkörper 3, der zum umfangsseitigen Umschließen der Batteriezellen 2 bezüglich je einer Fügeachse paarweise gegenüberliegende Durchtrittsöffnungen 4 aufweist. Der Grundkörper 3 bildet einen quer zu den Fügeachsen verlaufenden Strömungskanal für ein Temperierfluid zur Temperierung der Batteriezellen 2 und umfasst zudem wenigstens einen in Richtung der Fügeachsen verlaufenden Temperierfluidanschluss 5 auf.

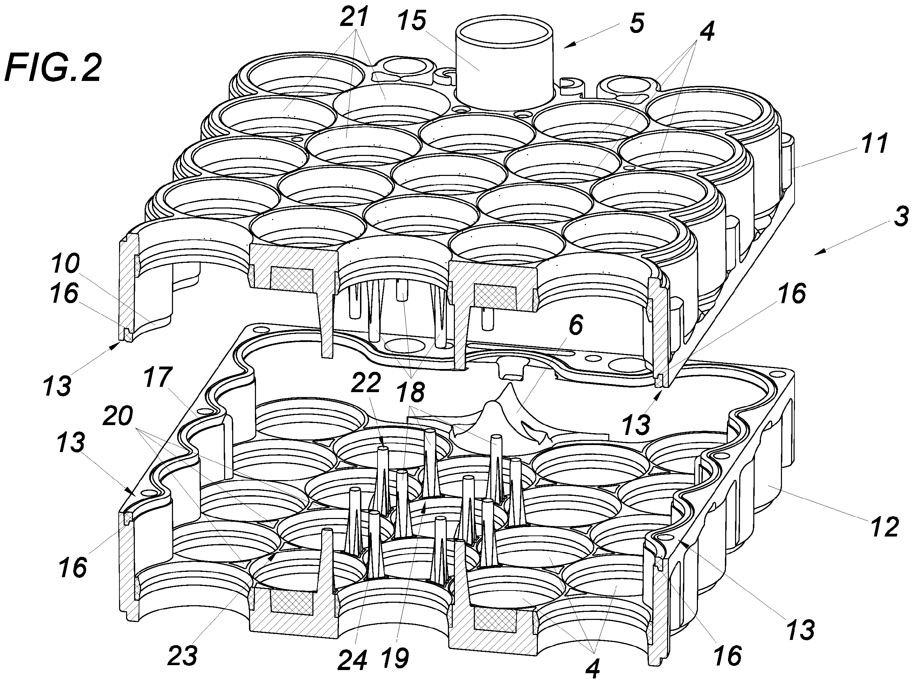

Erfindungsgemäß weist der Grundkörper 3 zudem einen dem Temperierfluidanschluss 5 in Richtung der Fügeachsen gegenüberliegenden Strömungsteiler 6 auf. Dieser bildet Anströmflächen 7 zur Teilung des Temperierfluidstromes in einzelne Teilströme und zur im Wesentlichen tangentialen Anströmung der angrenzenden Batteriezellen 2. Dabei umfasst der Strömungsteiler 6 einen Hauptleitkamm 8 sowie Nebenleitkämme 9. Sowohl der Hauptleitkamm 8 als auch die Nebenleitkämme 9 weisen jeweils einen sich zu den angrenzenden Durchtrittsöffnungen 4 verbreiternden Scheitelgrat 10 auf. Wie insbesondere in der Fig. 2 zu erkennen ist, nimmt der Kammquerschnitt sowohl des Hauptleitkammes 8 als auch der Nebenleitkämme 9 in Richtung der jeweils angrenzenden Durchtrittsöffnungen 4 zu.

Gemäß einer Ausführungsform weist der Grundkörper 3 zwei gegenüberliegende, einander beispielsweise als spritzgegossene Gleichteile ausgeführte Dichtelemente 11,12 auf, die punktsymmetrisch zueinander ausgerichtet und über je eine Auflagefläche 13 miteinander verbunden den Grundkörper 3 bilden. Im zusammengefügten Zustand liegt jeweils ein Temperierfluidanschluss 5 des einen Dichtelementes 11 dem Strömungsteiler 6 des anderen Dichtelementes 12 gegenüber.

Die Temperierfluidanschlüsse 5 können weibliche Kupplungsstücke 14 in Gestalt von weiblichen Ansteckhülsen bilden, sodass zufolge der gleichteiligen Dichtelemente 11,12 zwei aufeinanderfolgende Grundkörper über ein männliches, in die beiden Ansteckhülsen 14 eingeführtes Verbindungsstück 15 miteinander strömungsverbunden werden können.

Grundkörperinnenseitig schließt eine, einen Dichtungsausgleichsbereich 29 aufweisende Aufnahmenut 16 an die Auflagefläche 13 an. In die jeweilige Aufnahmenut 16 der Dichtelemente 11,12 ist eine umlaufende Randdichtung 17 eingesetzt. Besonders günstige Fertigungsbedingungen sowie eine gute Abdichtung zwischen der Randdichtung 17 und der Aufnahmenut 16 ergeben sich, wenn die Randdichtung 17 mit der Aufnahmenut 16 im Mehrkomponenten-Spritzgussverfahren verbunden ist, wobei die Randdichtung 17 eine Weichkomponente beispielsweise in Form eines thermoplastischen Elastomers und die Aufnahmenut 16 eine Hartkomponente in Form von beispielsweise Polyoxymethylen darstellen.

Die Dichtelemente 11,12 der in Fig. 2 beispielhaft dargestellten Temperiervorrichtung weisen zudem je zwischen drei aneinandergrenzenden Durchtrittsöffnungen 4 grundkörperinnenseitig vorragende und in Richtung der Fügeachsen verlaufende Stützstifte 18 auf, die im Übergangsbereich 19 zu den Durchtrittsöffnungen 4 einen Stützkörper 20 für die in Umfangsrichtung der Durchtrittsöffnungen 4 verlaufenden Durchtrittsdichtungen 21 bilden. Im assemblierten Zustand liegen die Stützstifte 18 mit ihren jeweiligen Kontaktflächen 22 aufeinander auf. Die Stützkörper 20 können überdies auch in den stützstiftfreien Übergangsbereichen 23 vorgesehen sein. Wie in der Fig. 2 zu erkennen ist, können die Stützstifte 18 zur besseren Druckverteilung auf den Übergangsbereich 19 durch jeweils drei hin zu diesem verlaufende Stege 24 verstärkt sein. Analog zur Randdichtung 17 und der Aufnahmenut 16 können auch die Durchtrittsdichtungen 21 mit den Stützkörpern 20 im Mehrkomponenten-Spritzgussverfahren verbunden sein.

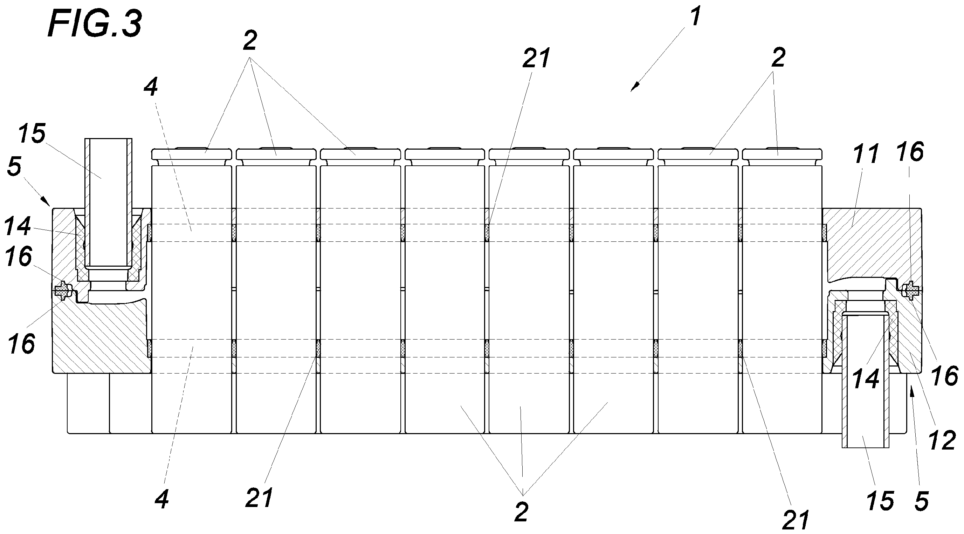

Fig. 3 zeigt ein assembliertes Modul 1 mit durch die Durchtrittsöffnung 4 gefügten und umfangsseitig von Durchtrittsdichtungen 21 umschlossenen Batteriezellen 2.

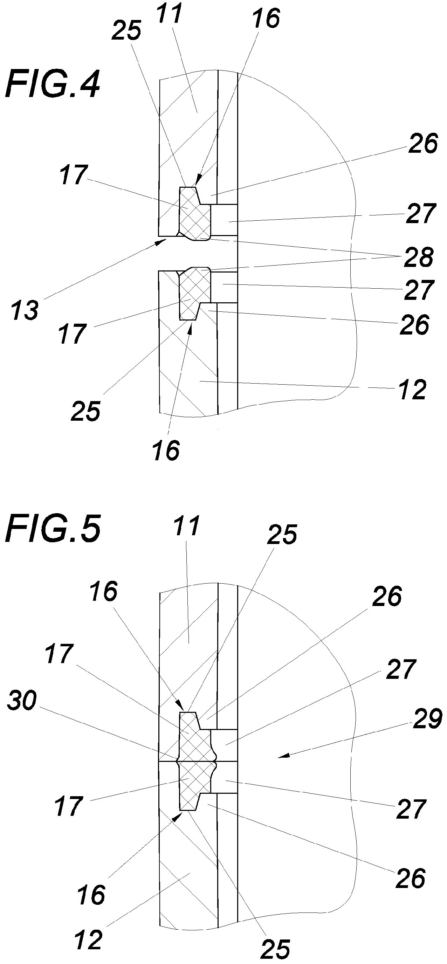

Wie insbesondere in der Fig. 4 und 5 zu erkennen ist, weist die Aufnahmenut 16 eine gegenüber dem Nutgrund 25 hervortretende Positionierstufe 26 für eine Randdichtung 17 auf. Dabei bildet der oberhalb der Positionierstufe 26 freibleibende Nutbereich 27 den Dichtungsausgleichsbereich 29. Beim Zusammenfügen der beiden Dichtelemente 11,12 kann ein Teil der aufeinander zu liegen kommenden und sich zufolge der erforderlichen Flächenpressung elastisch verformenden Randdichtungen 17 in den Dichtungsausgleichsbereich 29 ausweichen, wie dies in Fig. 5 dargestellt wird. Die Randdichtung 17 kann zudem einen zur Auflagefläche 13 hin unter diese abfallenden Dichtwulst 28 aufweisen, sodass sich ein zweiter, grundkörperaußenseitig an die Aufnahmenut 16 anschließender Dichtungsausgleichsbereich 30 bildet.

## Patentansprüche

1. Temperiervorrichtung für einzelne, zu einem Modul (1) zusammengesetzte Batteriezellen (2), mit einem Grundkörper (3), der zum umfangsseitigen Umschließen der Batteriezellen (2) bezüglich je einer Fügeachse paarweise gegenüberliegende Durchtrittsöffnungen (4) aufweist und einen quer zu den Fügeachsen verlaufenden Strömungskanal für ein Temperierfluid bildet, wobei der Grundkörper (3) wenigstens einen in Richtung der Fügeachsen verlaufenden Temperierfluidanschluss (5) umfasst, **dadurch gekennzeichnet, dass** der Grundkörper (3) einen dem Temperierfluidanschluss (5) in Richtung der Fügeachsen gegenüberliegenden Strömungsteiler (6) aufweist, der Anströmflächen (7) zur Teilung des Temperierfluidstromes in einzelne Teilströme und zur im Wesentlichen tangentialen Anströmung der angrenzenden Batteriezellen (2) bildet.

2. Temperiervorrichtung nach Anspruch 1, **dadurch gekennzeichnet, dass** der Strömungsteiler (6) einen im Wesentlichen radial zu einer ersten Durchtrittsöffnung (4) verlaufenden Hauptleitkamm (8) aufweist.

3. Temperiervorrichtung nach Anspruch 2, **dadurch gekennzeichnet, dass** der Strömungsteiler (6) zwei symmetrisch zum Hauptleitkamm (8) und je im Wesentlichen radial zu einer an die erste Durchtrittsöffnung (4) anschließenden Durchtrittsöffnung (4) verlaufende Nebenleitkämme (9) umfasst.

4. Temperiervorrichtung nach einem der Ansprüche 1 bis 3, **dadurch gekennzeichnet, dass** der Temperierfluidanschluss (5) ein weibliches Kupplungsstück (14) für die Temperierfluidleitung umfasst.

5. Temperiervorrichtung nach einem der Ansprüche 1 bis 4, **dadurch gekennzeichnet, dass** der Grundkörper (3) zwei gegenüberliegende, einander gleichende Dichtelemente (11, 12) aufweist, die punktsymmetrisch zueinander ausgerichtet und über je eine Auflagefläche (13) miteinander verbunden den Grundkörper (3) bilden.

6. Temperiervorrichtung nach Anspruch 5, **dadurch gekennzeichnet, dass** an die Auflagefläche (13) grundkörperinnenseitig eine, einen Dichtungsausgleichsbereich (15) aufweisende Aufnahmenut (16) anschließt.

7. Temperiervorrichtung nach Anspruch 6, **dadurch gekennzeichnet, dass** die Aufnahmenut (16) eine gegenüber dem Nutgrund (25) hervortretende Positionierstufe (26) für eine Randdichtung (17) aufweist und dass der oberhalb der Positionierstufe (26) freibleibende Nutbereich (27) den Dichtungsausgleichsbereich (15) bildet.

## Claims

1. Temperature-control device for individual battery cells (2), assembled together to form a module (1), having a main body (3), which has passage openings (4) lying opposite each other in pairs in relation to a respective joining axis in order to surround the battery cells (2) circumferentially, and forms a flow channel, extending transversely with respect to the joining axes, for a temperature-control fluid, wherein the main body (3) includes at least one temperature-control fluid connection (5) extending in the direction of the joining axes, **characterised in that** the main body (3) comprises a flow divider (6) lying opposite the temperature-control fluid connection (5) in the direction of the joining axes, said flow divider forming flow-impact surfaces (7) for dividing the temperature-control fluid flow into individual partial flows and for causing a substantially tangential flow against the adjoining battery cells (2).

2. Temperature-control device as claimed in claim 1, **characterised in that** the flow divider (6) comprises a main conductor comb (8) extending substantially radially with respect to a first passage opening (4).

3. Temperature-control device as claimed in claim 2, **characterised in that** the flow divider (6) includes two auxiliary conductor combs (9) extending symmetrically with respect to the main conductor comb (8) and in each case substantially radially with respect to a passage opening (4) adjoining the first passage opening (4).

4. Temperature-control device as claimed in any one of claims 1 to 3, **characterised in that** the temperature-control fluid connection (5) includes a female coupling piece (14) for the temperature-control fluid line.

5. Temperature-control device as claimed in any one of claims 1 to 4, **characterised in that** the main body (3) comprises two opposing, mutually identical sealing elements (11, 12) which form the main body (3) by being oriented in a point-symmetrical manner with respect to each other and being connected together via a respective contact surface (13).

6. Temperature-control device as claimed in claim 5, **characterised in that** a receiving groove (16) comprising a seal equalisation region (15) adjoins the contact surface (13) on the inner side of the main body.

7. Temperature-control device as claimed in claim 6, **characterised in that** the receiving groove (16) comprises a positioning step (26), protruding with respect to the groove base (25), for an edge seal (17), and **in that** the groove region (27) exposed above the positioning step (26) forms the seal equalisation region (15).

## Revendications

1. Dispositif de régulation thermique pour certaines cellules de batterie (2) assemblées en module (1), avec un corps de base (3) qui comporte des ouvertures de passage (4) disposées en opposition par paires par rapport à un axe d'assemblage pour entourer les cellules de batterie (2) sur leur pourtour et forme un canal d'écoulement s'étendant transversalement par rapport aux axes d'assemblage pour un fluide de régulation thermique, le corps de base (3) comprenant au moins un raccord de fluide de régulation thermique (5) s'étendant dans la direction des axes d'assemblage, **caractérisé en ce que** le corps de base (3) comprend un diviseur de flux (6) opposé au raccord de fluide de régulation thermique (5) dans la direction des axes d'assemblage qui forme des surfaces d'afflux (7) pour diviser le flux de fluide de régulation thermique en flux partiels individuels et pour alimenter de manière sensiblement tangentielle les cellules de batterie (2) adjacentes.

2. Dispositif de régulation thermique selon la revendication 1, **caractérisé en ce que** le diviseur de flux (6) comporte un peigne de conduite principal (8) s'étendant radialement par rapport à une première ouverture de passage (4).

3. Dispositif de régulation thermique selon la revendication 2, **caractérisé en ce que** le diviseur de flux (6) comprend deux peignes de conduite annexes (9) s'étendant symétriquement par rapport au peigne de conduite principal (8) et chacun sensiblement radialement par rapport à une ouverture de passage (4) faisant suite à la première ouverture de passage (4).

4. Dispositif de régulation thermique selon une des revendications 1 à 3, **caractérisé en ce que** le raccord de fluide de régulation thermique (5) comprend un élément d'accouplement femelle (14) pour la conduite de fluide de régulation thermique.

5. Dispositif de régulation thermique selon une des revendications 1 à 4, **caractérisé en ce que** le corps de base (3) comporte deux éléments d'étanchéité (11, 12) similaires et opposés entre eux qui sont orientés à symétrie ponctuelle l'un par rapport à l'autre et forment le corps de base (3) en étant reliés entre eux chacun par une surface de contact (13).

6. Dispositif de régulation thermique selon la revendication 5, **caractérisé en ce qu'**à la surface de contact (13) se raccorde du côté intérieur du corps de base une rainure de réception (16) présentant une zone de compensation d'étanchéité (15).

7. Dispositif de régulation thermique selon la revendication 6, **caractérisé en ce que** la rainure de réception (16) présente un épaulement de positionnement (26) saillant par rapport au fond de rainure (25) destiné à un joint périphérique (17) et que la zone de la rainure (27) dépassant au-dessus de l'épaulement de positionnement (26) forme la zone de compensation d'étanchéité (15).
